(19) Europäisches Patentamt
European Patent Office
Office européen des brevets

(11) **EP 3 637 535 B1**

(12) **EUROPEAN PATENT SPECIFICATION**

(45) Date of publication and mention
of the grant of the patent:
**12.07.2023 Bulletin 2023/28**

(21) Application number: **17918547.5**

(22) Date of filing: **27.07.2017**

(51) International Patent Classification (IPC):
**H01M 10/613** (2014.01)    **H01M 10/617** (2014.01)
**H01M 10/6556** (2014.01)    **H01M 10/6568** (2014.01)

(52) Cooperative Patent Classification (CPC):
**H01M 10/613; H01M 10/617; H01M 10/6556;
H01M 10/6568;** H01M 10/625; Y02E 60/10

(86) International application number:
**PCT/CN2017/094697**

(87) International publication number:
**WO 2019/014960 (24.01.2019 Gazette 2019/04)**

(54) **UNIFORM FLOW DEVICE AND METHOD FOR BATTERY ENERGY-STORAGE LIQUID COOLING SYSTEM**

GLEICHFÖRMIGE STRÖMUNGSVORRICHTUNG UND VERFAHREN FÜR SYSTEM ZUR KÜHLUNG EINER BATTERIEENERGIESPEICHERFLÜSSIGKEIT

DISPOSITIF D'ÉCOULEMENT UNIFORME ET PROCÉDÉ POUR SYSTÈME DE REFROIDISSEMENT DE LIQUIDE DE STOCKAGE D'ÉNERGIE DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.07.2017  CN 201710599965**

(43) Date of publication of application:
**15.04.2020  Bulletin 2020/16**

(73) Proprietor: Jing-Jin Electric Technologies Co., Ltd
**Beijing 100016 (CN)**

(72) Inventor: **HAN, James
Beijing 100016 (CN)**

(74) Representative: **Petraz, Gilberto Luigi et al
GLP S.r.l.
Viale Europa Unita, 171
33100 Udine (IT)**

(56) References cited:
**EP-A1- 2 696 433**      **CN-A- 103 155 264
DE-A1-102010 032 901      DE-A1-102012 209 302
US-A- 4 578 324      US-B1- 6 482 542**

**Description**

TECHNICAL FIELD

The present disclosure relates to a device for flow equalization of a liquid cooling system of battery energy storage, wherein the device is connected to battery packs or modules and a liquid cooling system via cooling-fluid pipelines, to more uniformly distribute the flow rates of a cooling fluid within the battery packs or modules. The present disclosure further relates to a method for flow equalization of a liquid cooling system of battery energy storage.

BACKGROUND

Among various techniques of energy storage, lithium-ion batteries have gradually become the only choice for industrial and vehicle-mounted energy storage devices due to their high energy density and good prospect of commercialization. However, the performances of energy-storage battery systems of high capacity and high power are sensitive to temperature fluctuation, and both of environments of long-term high-and-low temperatures and the accumulation of temperature difference of the system affect the lives and the performances of batteries. Therefore, in operation, an energy-storage battery system of high power must employ a dedicated cooling device for heat dissipation, and simultaneously the temperatures of various positions of the system are required to be the same to the largest extent.

Considering the heat transfer efficiency, the uniformity of temperature controlling and the difficulty in achieving, currently, liquid cooling systems have gradually become a standard configuration of large-scale battery systems. However, the current liquid cooling systems, when connected to battery packs or modules (hereinafter collectively referred to as modules), still have many defects in terms of the controlling of temperature uniformity.

A battery system is formed by a series of modules, and the heat generated in operation is accumulated within the modules. When the liquid cooling system is operating, the cooling fluid enters the modules under the driving of a circulating pump, exchanges heat with the modules, flows out, and then exchanges heat with an external heat exchanger (a heat radiator or an air conditioning), thereby bringing out the heat of the battery system, to ensure that the temperature of the system is within a suitable range. In the process, the process of the heat exchange between the modules and the cooling fluid is the most key step, the effect of which decides the efficacy of the cooling system.

The heat exchange between the modules and the cooling fluid may be considered as convective heat dissipation, and its convective-heat-transfer speed:

$$\Phi = \alpha A(Tw - T),$$

wherein $\Phi$ is the convective-heat-transfer speed (heat flow rate rw);
A is the heat transfer area (m$^2$);
Tw is the temperature of the wall surface contacting with the fluid (°C);
T is the average temperature of the fluid (°C); and
$\alpha$ is the convective-heat-transfer coefficient.

Because the heat transfer between the modules and the tube wall is by conduction, and the thermal resistance may be considered as a constant value, the Tw may be considered as the temperature of the modules, and the temperature of the modules is decided by the heat generation speed of the modules, that is, the power of the system. The heat transfer area A is a constant value. The $\alpha$ is mainly influenced by the flow rate and the coefficient of turbulence of the cooling fluid. The T is the temperature of the cooling-fluid inlets of the modules.

The currently popular approach for designing liquid cooling systems is to compromise between $\alpha$ and T, and therefore series-connection systems and parallel-connection systems have emerged.

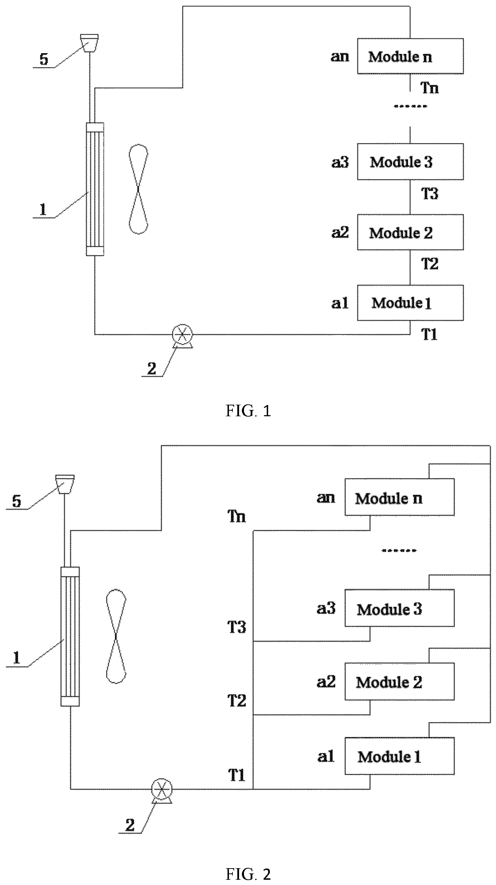

As shown in Fig. 1, in a series-connection system: the liquid cooling system comprises an external heat exchanger 1 and a cooling-fluid pump 2, and the cooling fluid is pushed by the cooling-fluid pump 2, sequentially passes through each of the modules, and finally flows back to the external heat exchanger 1. The external heat exchanger 1 is further provided with a liquid-level equalizer 5.

The advantage of such a system is that it can ensure that the flow rates and the coefficients of turbulence of the cooling fluid within all of the modules are similar, thereby ensuring $\alpha 1 = \alpha 2 = \alpha 3 = ... = \alpha n$. However, because the inlet temperature of one module is the outlet temperature of the previous one module, the inlet temperatures T of the subsequent modules gradually rise, $T1 < T2 < T3 < ... < Tn$, so $\Phi 1 > \Phi 2 > \Phi 3 > ... > \Phi n$. Therefore, it can be known that, the effect of temperature equalization of the series-connection system is poor.

As shown in Fig. 2, in a parallel-connection system: the liquid cooling system comprises an external heat exchanger 1 and a cooling-fluid pump 2, and the cooling fluid is pushed by the cooling-fluid pump 2, enters the modules respectively from various inlets, and finally flows back to the external heat exchanger 1. The external heat exchanger 1 is further provided with a liquid-level equalizer 5.

The advantage of such a system is that it can ensure that the temperatures at each of the cooling-fluid inlets of the modules are the same, $T1 = T1 = T3 = ... = Tn$. However, the flow rates of the cooling fluids that enter the modules are influenced by the resistances of the pipelines and factors such as the heights of the positions of the modules in the entire vehicle and the difference in the modules, which may cause different head pressures and different flow rates of the cooling fluids at the inlets. As a result, $\alpha1 > \alpha2 > \alpha3 > ... > \alpha n$, and accordingly $\Phi1 > \Phi2 > \Phi3 > ... > \Phi n$. Therefore, it can be known that, the effect of temperature equalization of the parallel-connection system is not ideal either.

EP2696433A1 discloses a cooling device for a car battery having a cooling body provided with channels for flow with a coolant, and thermally contacting to battery cells of a vehicle battery. An endcap is provided at an end of the cooling body, where the channels of the cooling body open into the endcap. Multiple projections are formed at the endcap and project into the channels of the cooling body. The endcap is formed as a coolant distributor with an inlet and an outlet of coolant, and as a lid element by which the coolant is turned back.

DE102010032901A1 discloses a cooling device for lithium-ion battery of an electric vehicle, having a cooling base (18) comprising two flat lines (22, 24) with opposite flow directions, and an inlet distributor attached to one of the flat lines. A deflection element connects the two flat lines, and an external battery is attached to the other flat line. The flat lines are coplanarly arranged, where a flat side of the flat lines functions as a contact surface (20) for a battery cell group (14). Multiple coolant channels (38) are distributed over width (b) of the flat lines. The inlet distributor and the external battery comprise upper and lower parts.

DE102012209302A1 describes a device for distributing coolants for cooling consumers (for example battery cells), with a common feed line or the consumers and a common return line, the common feed line and the return line having branches that connect to the consumers via hose pieces or connect hoses. A controllable throttle element is present between at least one branch of the common feed line and at least one consumer. By suitable control of the throttle elements, the consumers can be supplied with coolant with the same flow temperatures.

US4578324A describes an active cooling system for cooling electrochemical cells that are arranged in a stack in a fuel cell or battery. The cooling system comprises cooling panels carrying a cooling fluid that flows adjacent to, and parallel to the plane of, each cell. The rate of cooling fluid flow past each cell is made to be substantially equal, so that each cell experiences substantially the same cooling environment, adding to the longevity of the fuel cell or battery. This can be accomplished by equalizing the resistance to cooling fluid flow for each cooling path, e.g., by using pressure equalizing, monotonically increasingly sized orifices in an input manifold.

## SUMMARY

Aiming at the above problems in the prior art, the present disclosure provides a battery energy storage system as defined in claim 1.

Optionally, an outer wall of the throttle pipe is provided with an external thread, an inner wall of the feeding inlet is provided with an internal thread, and the throttle pipe and the feeding inlet are assembled together by the external thread and the internal thread.

Optionally, the throttle pipe is provided with a clip or a snap slot, an inner wall of the feeding inlet is provided with a snap slot or a clip, and the throttle pipe and the feeding inlet are assembled together by snap fitting.

Optionally, after the throttle pipe has been inserted into the feeding inlet, the throttle pipe and the feeding inlet are assembled together by welding or adhesion.

Optionally, the top wall of the throttle pipe is provided with a hole or slot for fitting an assembling tool.

Optionally, the feeding inlet and a pipeline of the cooling fluid are integrally manufactured or separately manufactured; and the throttle pipe and the feeding inlet are integrally manufactured or separately manufactured.

Optionally, an outer wall of the feeding inlet is provided with a retreat stopping slot and a flange, and an inner wall of the feeding inlet is provided with a limiting mechanism, to limit and fix the throttle pipe.

A method for flow equalization of a liquid cooling system of battery energy storage, wherein the method comprises according to lengths, directions and height differences of pipelines between battery modules and a cooling-fluid pump, calculating pressure losses of cooling fluids at feeding inlets, and providing the above-described device for flow equalization of a liquid cooling system of battery energy storage, to equalize flow rates at the battery modules.

Optionally, the throttle pipes are installed into the feeding inlets when the battery modules are being installed on a vehicle; and the method is usable for centralized battery modules or distributed battery modules.

The present disclosure, by employing the above structure configuration, has the following advantages:
The present disclosure can enable the liquid cooling system to more uniformly distribute the flow rates of the cooling fluids among battery sub-packs or modules, thereby ensuring that the battery system operates at more uniform environmental temperatures, to reduce the difference in the performances of the modules, and prolong the service lives of the batteries.

The detachable structure and serialized configuration of the throttle pipes of the present disclosure can ensure a simple and easy implementing process, which facilitates to improve the generalization and standardization of the modules.

The throttle pipes of the present disclosure have a simple structure, obtain a significant effect of adjusting, and are easy to use.

## BRIEF DESCRIPTION OF DRAWINGS

Fig. 1 is a structural schematic diagram of a liquid cooling system of battery energy storage of a series-connection structure in the prior art;

Fig. 2 is a structural schematic diagram of a liquid cooling system of battery energy storage of a parallel-connection structure in the prior art;

Fig. 3 is a structural schematic diagram of a liquid cooling system of battery energy storage of the parallel-connection structure of the present disclosure;

Fig. 4 is a front view of the throttle pipe according to the present disclosure;

Fig. 5 is a front view of the assembled state of the throttle pipe and the feeding inlet according to the present disclosure;

Fig. 6 is a top view of the assembled state of the throttle pipe and the feeding inlet according to the present disclosure;

Fig. 7 is a top view of a throttle pipe (not part of the invention);

Fig. 8 is a top view of another throttle pipe (not part of the invention); and

Fig. 9 is a top view of yet another throttle pipe (not part of the invention).

In the drawings: 1. external heat exchanger; 2. cooling-fluid pump; 3. throttle pipe; 3-1. flow restriction orifice; 3-2. hole for fitting an assembling tool; 4. feeding inlet; 4-1. retreat stopping slot; 4-2. flange; and 5. liquid-level equalizer.

## DETAILED DESCRIPTION

In order to make the objects, the technical solutions and the advantages of the present disclosure clearer, the embodiments of the present disclosure will be described below in further detail in conjunction with the drawings.

The first embodiment

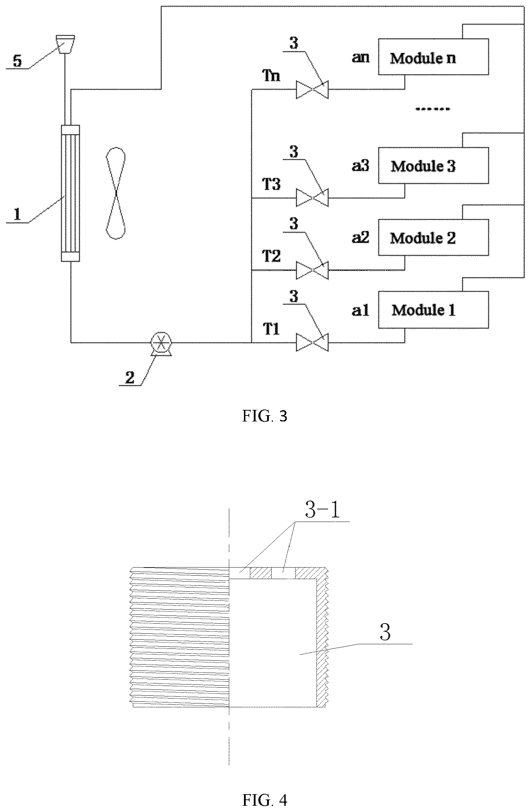

Figs. 3, 4 and 5 show the first embodiment of the present disclosure. In the present embodiment, a device for flow equalization of a liquid cooling system of battery energy storage comprises a plurality of battery modules in parallel, which are a module 1, a module 2, a module 3,..., and a module n, each of the battery modules being connected to the liquid cooling system, and being provided with a cooling-fluid feeding inlet 4, wherein a throttle pipe 3 is provided in the feeding inlet 4, the throttle pipe 3 is provided with one or more flow restriction orifices 3-1, and the cooling fluids that enter the feeding inlets 4 are adjusted by the throttle pipes 3 to equal pressures.

Because the pressures of the cooling fluids are equal, the flow speeds and the flow rates of the cooling fluids tend to be equal, the convective-heat-transfer coefficients $\alpha$ tend to be equal, and the convective-heat-transfer speeds $\Phi$ tend to be equal.

In the present embodiment, the feeding inlet 4 and the cooling-fluid pipeline are separately manufactured, and the throttle pipe 3 and the feeding inlet 4 are separately manufactured.

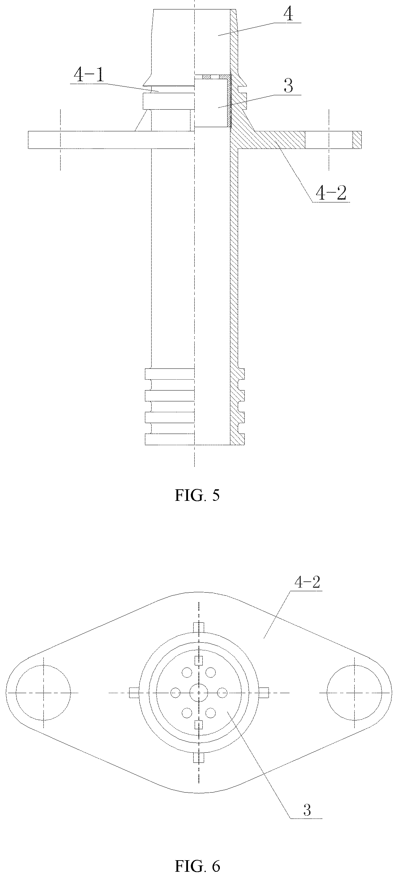

As shown in Figs. 4 and 5, the outer wall of the throttle pipe 3 is provided with an external thread, the inner wall of the feeding inlet 4 is provided with an internal thread, and the throttle pipe 3 and the feeding inlet 4 are assembled together by the external thread and the internal thread.

The throttle pipe 3 may be manufactured by using a metallic or non-metallic material. The throttle pipe 3, compared with the throttle valves in the prior art, has a simpler structure and a lower cost, and can be installed into the feeding inlet 4, which does not increase the volume of the liquid cooling system, to facilitate the usage. After the installation, generally the pressure there is no longer required to be adjusted, so a throttle valve is not required.

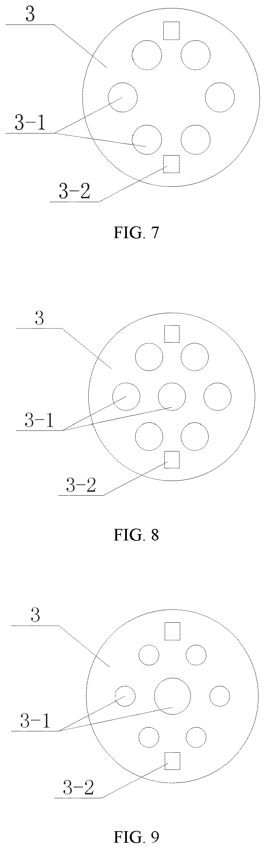

As shown in Fig. 4, an end of the throttle pipe 3 in the axial direction is provided with an top wall, the top wall is provided with a plurality of flow restriction orifices 3-1, and may also be provided with a single flow restriction orifice 3-1, the areas of the flow restriction orifices 3-1 of different throttle pipes 3 are different, as shown in Figs. 7, 8 and 9, and by using different combinations of orifice diameters and orifice distributions the resistance coefficients with which the cooling fluids flow through the throttle pipes 3 are adjusted and the turbulence coefficients after the cooling fluids flow through the throttle pipes 3 are increased. The increasing of the turbulence coefficients after the cooling fluids flow through the throttle pipe 3 can further improve the heat exchange efficiency.

In Fig. 7 (not part of the invention), the top wall is provided with six flow restriction orifices 3-1 arranged in a circle. In Fig. 8 (not part of the invention), the top wall is provided with six flow restriction orifices 3-1 arranged in a circle and one flow restriction orifice 3-1 in the center, and the central flow restriction orifice 3-1 and the peripheral flow restriction orifices 3-1 have equal orifice diameters. In Fig. 9 (not part of the invention), the top wall is provided with six flow restriction orifices 3-1 arranged in a circle and one flow restriction orifice 3-1 in the center, and the central flow restriction orifice 3-1 has an orifice diameter greater than those of the peripheral flow restriction orifices 3-1.

In selecting the throttle pipes 3 for each of the battery modules, it is required to, according to the lengths, the directions and the height differences of the pipelines between the battery modules and a cooling-fluid pump 2, calculate the pressure losses of the cooling fluids at the feeding inlets 4, and then provide the corresponding throttle pipes 3, to equalize the flow rates at the battery modules.

For example, if the pipeline between a battery module and the cooling-fluid pump 2 is longer, has more turns, and has a greater height, it is required to install a throttle pipe 3 with a greater area of the flow restriction orifices 3-1, to increase the pressure of the cooling fluid that enters the feeding inlet 4.

If the pipeline between a battery module and the cooling-fluid pump 2 is shorter, has less turns, and has a less height, it is required to install a throttle pipe 3 with a less area of the flow restriction orifices 3-1, to reduce the pressure of the cooling fluid that enters the feeding inlet 4.

As shown in Figs. 7, 8 and 9 (not part of the invention), the top wall of the throttle pipe 3 is provided with a hole 3-2 for fitting an assembling tool, and in installing the throttle pipe 3 the assembling tool may be inserted into the hole 3-2 to rotate the throttle pipe 3. Alternatively, that may be provided as a slot for fitting an assembling tool, wherein the slot does not penetrate through the top wall of the throttle pipe 3.

As shown in Figs. 5 and 6, the outer wall of the feeding inlet 4 is provided with a retreat stopping slot 4-1 and a flange 4-2. In Fig. 5, an upper end opening of the feeding inlet 4 is connected to the liquid cooling system, and a lower end opening is connected to the battery module. The retreat stopping slot 4-1 can improve the fastness of the connection with the cooling-fluid pipeline, to prevent disconnection from the cooling-fluid pipeline. The flange 4-2 serves to fix the feeding inlet 4. The flange 4-2 may be integrally manufactured with the feeding inlet 4, or be separately manufactured from and then assembled together with the feeding inlet 4.

The inner wall of the feeding inlet 4 is provided with a limiting mechanism, for example a protrusion at the bottom end of the thread section, to limit and fix the throttle pipe 3, to prevent the throttle pipe 3 from entering too deep or loosening.

In the present embodiment, by manufacturing a series of throttle pipes 3 having an external thread, and designing the resistance coefficients for each of the throttle pipes 3 by accurate calculation, different pipeline resistances can be generated, thereby offsetting the influences on the $\alpha$ of the resistances of the cooling-fluid pipelines and of the factors such as the heights of the positions of the battery modules in the entire vehicle and the differences in the battery modules, to ensure that $\alpha1 = \alpha2 = \alpha3 = ... = \alpha n$. Because it is a parallel-connection system, the temperatures of the cooling-fluid inlets of the modules are the same; that is, $T1 = T2 = T3 = ... = Tn$, thereby reaching the target of $\Phi1 = \Phi2 = \Phi3 = ... = \Phi n$.

The second embodiment

The second embodiment of the present disclosure is an improvement that is made on the basis of the first embodiment. The second embodiment of the present disclosure differs from the first embodiment in that the throttle pipe 3 is provided with a clip or a snap slot, the inner wall of the feeding inlet 4 is provided with a snap slot or a clip, and the throttle pipe 3 and the feeding inlet 4 are assembled together by snap fitting.

Alternatively, after the throttle pipe 3 has been inserted into the feeding inlet 4, the throttle pipe and the feeding inlet are assembled together by welding or adhesion.

Welding or adhesion may serve as an assisting technical means for strengthening the connection, or welding or adhesion may be employed singly.

The other contents of the second embodiment of the present disclosure are the same as those of the first embodiment, and are not repeatedly described here.

The third embodiment

The third embodiment of the present disclosure is an improvement that is made on the basis of the first embodiment. The third embodiment of the present disclosure differs from the first embodiment in that the feeding inlet 4 and the cooling-fluid pipeline are integrally manufactured, and the throttle pipe 3 and the feeding inlet 4 are integrally manufactured.

In the case that the feeding inlet 4 and the cooling-fluid pipeline are integrally manufactured, preferably the throttle pipe 3 and the feeding inlet 4 are integrally manufactured, which avoids the burden of installing the throttle pipe 3 in later stages.

In the case that the throttle pipe 3 and the feeding inlet 4 are integrally manufactured, the feeding inlet 4 and the cooling-fluid pipeline may be separately manufactured, because the installation of the feeding inlet 4 in later stages is still convenient.

As in the first embodiment it is required to select different types of the throttle pipes 3, in the present embodiment it is required to select different types of the feeding inlets 4, or different types of the liquid cooling system pipelines.

The other contents of the third embodiment of the present disclosure are the same as those of the first embodiment, and are not repeatedly described here.

The fourth embodiment

The present embodiment provides a method for flow equalization of a liquid cooling system of battery energy storage. The method comprises according to the lengths, the directions and the height differences of the pipelines between battery modules and a cooling-fluid pump, calculating the pressure losses of the cooling fluids at feeding inlets, and then providing the corresponding device for flow equalization of a liquid cooling system of battery energy storage of the first embodiment, the second embodiment or the third embodiment, to equalize the flow rates at the battery modules.

If the device for flow equalization of a liquid cooling system of battery energy storage of the first embodiment or the second embodiment is provided, then different types of the throttle pipes 3 are installed into the feeding inlets 4 when the battery modules are being installed on a vehicle.

If the device for flow equalization of a liquid cooling system of battery energy storage of the third embodiment is provided, then when the battery modules are being installed on a vehicle it is required to install different types of the feeding inlets 4 or the liquid cooling system pipelines, or select suitable vehicle installation positions for different types of the battery modules.

The method is usable for centralized battery modules or distributed battery modules.

For example, in new energy buses, especially pure electric buses, the battery system generally, according to the space restriction, employs a distributed layout of standard cases (battery sub-packs) of different specifications. The positions and heights for installation are different, wherein generally they are deployed side by side under the floor, and laminated at the vehicle tail. When the technical solution of the present disclosure is employed, the losses of the head pressures at the inlets are calculated according to the lengths, the directions and the height differences of the pipelines between the standard cases and the cooling-fluid pump 2, , and then the corresponding throttle pipes are provided, to equalize the flow rates at the cases.

Moreover, because the throttle pipes 3 are installed when the battery sub-packs are being installed on a vehicle, in the production of the standard cases in the factory the environment for the vehicle installation is not required to be taken into consideration, which greatly improves the flexibility and convenience of field work.

For example, in hybrid power vehicles or passenger cars, the battery system is generally in a centralized layout according to the enveloping space, wherein according to the demands modules of different specifications are installed in one battery pack. When the technical solution of the present disclosure is employed, the losses of the head pressures at the inlets are calculated according to the lengths, the directions and the height differences of the pipelines between the modules and the cooling-fluid pump 2, , and then the corresponding throttle pipes are provided, to equalize the flow rates at the modules.

Similarly, the modules can be produced in standardized production, and the throttle pipes are installed when the battery packs are being assembled, whereby the module production is not required to take the positions into consideration, thereby improving the generalization degree and the convenience of the modules.

The above are merely particular embodiments of the present disclosure. By the teaching of the present disclosure, a person skilled in the art can make other modifications or variations on the basis of the above embodiments. A person skilled in the art should understand that, the above particular descriptions are only for the purpose of better interpreting the present disclosure, and the protection scope of the present disclosure should be subject to the protection scope of the claims.

**Claims**

1. A battery energy storage system, comprising a plurality of battery modules in parallel, each of the battery modules being connected to a liquid cooling system and being provided with a cooling-fluid feeding inlet (4), **characterized in that**:

   the battery energy storage system further comprises a device for flow equalization, the device for flow equalization comprises a plurality of throttle pipes (3), one of the throttle pipes (3) is provided in each feeding inlet (4), the throttle pipe (3) is provided with a flow restriction orifice (3-1), and cooling fluids that enter the feeding inlets (4) are adjusted by the throttle pipes (3) to equal pressures;
   the throttle pipe (3) is installed into the feeding inlet (4), an end of the throttle pipe (3) in an axial direction is provided with a top wall, the top wall is provided with a plurality of flow restriction orifices (3-1), areas of the flow restriction orifices (3-1) of different throttle pipes (3) are different, and by using different combinations of orifice diameters and orifice distributions, resistance coefficients with which the cooling fluids flow through the throttle pipes (3) are adjusted.

2. The battery energy storage system according to claim 1, **characterized in that**: an outer wall of the throttle pipe (3) is provided with an external thread, an inner wall of the feeding inlet (4) is provided with an internal thread, and the throttle pipe (3) and the feeding inlet (4) are assembled together by using the external thread and the internal thread.

3. The battery energy storage system according to claim 1, **characterized in that**: the throttle pipe (3) is provided with a clip or a snap slot, an inner wall of the feeding inlet (4) is provided with a snap slot or a clip, and the throttle pipe (3) and the feeding inlet (4) are assembled together by snap fitting.

4. The battery energy storage system according to claim 1, **characterized in that**: after the throttle pipe (3) has been inserted into the feeding inlet (4), the throttle pipe (3) and the feeding inlet (4) are assembled together by welding or adhesion.

5. The battery energy storage system according to claim 1, **characterized in that**: the top wall of the throttle pipe (3) is provided with a hole or slot for fitting an assembling tool (3-2).

6. The battery energy storage system according to claim 1, **characterized in that**: the feeding inlet (4) and a pipeline of the cooling fluid are integrally manufactured or separately manufactured; and the throttle pipe (3) and the feeding inlet (4) are integrally manufactured or separately manufactured.

7. The battery energy storage system according to claim 1, **characterized in that**: an outer wall of the feeding inlet (4) is provided with a retreat stopping slot (4-1) and a flange (4-2), and an inner wall of the feeding inlet (4) is provided with a limiting mechanism, to limit and fix the throttle pipe (3).

8. A method for flow equalization of a battery energy storage system, **characterized in that**: the method comprises according to lengths, directions and height differences of pipelines between battery modules and a cooling-fluid pump (2), calculating pressure losses of cooling fluids at feeding inlets (4), and providing the device for flow equalization according to any one of claims 1-7, to equalize flow rates at the battery modules.

9. The method for flow equalization of a battery energy storage system according to claim 8, **characterized in that**: the throttle pipes (3) are installed into the feeding inlets (4) when the battery modules are being installed on a vehicle; and the method is usable for centralized battery modules or distributed battery modules.

**Patentansprüche**

1. Batterieenergiespeichersystem, umfassend eine Vielzahl von parallel geschalteten Batteriemodulen, wobei jedes der Batteriemodule mit einem Flüssigkeitskühlungssystem verbunden ist und mit einem Kühlflüssigkeitszufuhreinlass (4) versehen ist, **dadurch gekennzeichnet, dass**:

   das Batterieenergiespeichersystem ferner eine Vorrichtung für den Strömungsausgleich umfasst, die Vorrichtung für den Strömungsausgleich eine Vielzahl von Drosselrohren (3) umfasst, eines der Drosselrohre (3) in jedem Zufuhreinlass (4) vorgesehen ist, das Drosselrohr (3) mit einer Strömungsbegrenzungsöffnung (3-1) versehen ist, und Kühlflüssigkeiten, die in die Zufuhreinlässe (4) einfließen, von den Drosselrohren (3) auf gleiche Drücke eingestellt werden;
   das Drosselrohr (3) in den Zufuhreinlass (4) hinein installiert ist, ein Ende des Drosselrohres (3) in einer axialen Richtung mit einer oberen Wand versehen ist, die obere Wand mit einer Vielzahl von Strömungsbegrenzungsöffnungen (3-1) versehen ist, Bereiche der Strömungsbegrenzungsöffnungen (3-1) von verschiedenen Drosselrohren (3) verschieden sind, und durch Verwendung von verschiedenen Kombinationen von Öffnungsdurchmessern und Öffnungsverteilungen, Widerstandskoeffizienten, mit welchen die Kühlflüssigkeiten durch die Drosselrohre (3) fließen, eingestellt werden.

2. Batterieenergiespeichersystem nach Anspruch 1, **dadurch gekennzeichnet, dass**: eine Außenwand des Drosselrohres (3) mit einem Außengewinde versehen ist, eine Innenwand des Zufuhreinlasses (4) mit einem Innengewinde versehen ist, und das Drosselrohr (3) und der Zufuhreinlass (4) durch Verwendung des Außengewindes und des Innengewindes zusammengebaut werden.

3. Batterieenergiespeichersystem nach Anspruch 1, **dadurch gekennzeichnet, dass**: das Drosselrohr (3) mit einer Schelle oder einem Einschnappschlitz versehen ist, eine Innenwand des Zufuhreinlasses (4) mit einem Einschnappschlitz oder einer Schelle versehen ist, und das Drosselrohr (3) und der Zufuhreinlass (4) durch Verschnappen zusammengebaut werden.

4. Batterieenergiespeichersystem nach Anspruch 1, **dadurch gekennzeichnet, dass**: nachdem das Drosselrohr (3) in den Zufuhreinlass (4) hinein eingefügt worden ist, das Drosselrohr (3) und der Zufuhreinlass (4) durch Schweißen oder Kleben zusammengebaut werden.

5. Batterieenergiespeichersystem nach Anspruch 1, **dadurch gekennzeichnet, dass**: die obere Wand des Drosselrohres (3) mit einem Loch oder einem Schlitz zum Einrasten eines Montierwerkzeugs (3-2) versehen ist.

6. Batterieenergiespeichersystem nach Anspruch 1, **dadurch gekennzeichnet, dass**: der Zufuhreinlass (4) und eine Rohrleitung der Kühlflüssigkeit einstückig gefertigt oder getrennt gefertigt werden; und das Drosselrohr (3) und der Zufuhreinlass (4) einstückig gefertigt oder getrennt gefertigt werden.

7. Batterieenergiespeichersystem nach Anspruch 1, **dadurch gekennzeichnet, dass**: eine Außenwand des Zufuhreinlasses (4) mit einem Rückzughalteschlitz (4-1) und einem Flansch (4-2) versehen ist, und eine Innenwand des Zufuhreinlasses (4) mit einem Begrenzungsmechanismus versehen ist, um das Drosselrohr (3) zu begrenzen und festzumontieren.

8. Verfahren zum Strömungsausgleich eines Batterieenergiespeichersystems, **dadurch gekennzeichnet, dass**: das Verfahren, je nach Längen, Richtungen und Höhenunterschieden von Rohrleitungen zwischen Batteriemodulen und einer Kühlflüssigkeitspumpe (2), das Berechnen von Druckverlusten von Kühlflüssigkeiten an Zufuhreinlässen (4) und das Vorsehen der Vorrichtung zum Strömungsausgleich nach einem der Ansprüche 1-7 umfasst, um Durchflüsse an den Batteriemodulen auszugleichen.

9. Verfahren zum Strömungsausgleich eines Batterieenergiespeichersystems nach Anspruch 8, **dadurch gekennzeichnet, dass**: die Drosselrohre (3) in die Zufuhreinlässe (4) hinein installiert sind, wenn die Batteriemodule an einem Fahrzeug gerade installiert werden; und das Verfahren für zentralisierte Batteriemodule oder verteilte Batteriemodule einsetzbar ist.

## Revendications

1. Système de stockage d'énergie de batterie, comprenant une pluralité de modules de batterie en parallèle, chacun des modules de batterie étant connecté à un système de refroidissement de liquide et étant muni d'une entrée d'alimentation en fluide de refroidissement (4), **caractérisé en ce que** :

   le système de stockage d'énergie de batterie comprend en outre un dispositif d'égalisation de flux, le dispositif d'égalisation de flux comprend une pluralité de tuyaux d'étranglement (3), l'un des tuyaux d'étranglement (3) est prévu dans chaque entrée d'alimentation (4), le tuyau d'étranglement (3) est pourvu d'un orifice de restriction de flux (3-1), et les fluides de refroidissement qui entrent dans les entrées d'alimentation (4) sont ajustés par les tuyaux d'étranglement (3) à des pressions égales ;
   le tuyau d'étranglement (3) est installé dans l'entrée d'alimentation (4), une extrémité du tuyau d'étranglement (3) dans une direction axiale est pourvue d'une paroi supérieure, la paroi supérieure est pourvue d'une pluralité d'orifices de restriction de flux (3-1), des zones des orifices de restriction de flux (3-1) de différents tuyaux d'étranglement (3) sont différentes, et en utilisant différentes combinaisons de diamètres d'orifices et de distributions d'orifices, des coefficients de résistance avec lesquels les fluides de refroidissement s'écoulent à travers les tuyaux d'étranglement (3) sont ajustés.

2. Système de stockage d'énergie de batterie selon la revendication 1, **caractérisé en ce que** : une paroi extérieure du tuyau d'étranglement (3) est pourvue d'un filetage extérieur, une paroi intérieure de l'entrée d'alimentation (4) est pourvue d'un filetage intérieur, et le tuyau d'étranglement (3) et l'entrée d'alimentation (4) sont assemblés ensemble en utilisant le filetage extérieur et le filetage intérieur.

3. Système de stockage d'énergie de batterie selon la revendication 1, **caractérisé en ce que** : le tuyau d'étranglement (3) est muni d'une pince ou d'une fente d'encliquetage, une paroi intérieure de l'entrée d'alimentation (4) est pourvue d'une fente d'encliquetage ou d'une pince, et le tuyau d'étranglement (3) et l'entrée d'alimentation (4) sont assemblés ensemble par encliquetage.

4. Système de stockage d'énergie de batterie selon la revendication 1, **caractérisé en ce que** : après que le tuyau d'étranglement (3) a été inséré dans l'entrée d'alimentation (4), le tuyau d'étranglement (3) et l'entrée d'alimentation (4) sont assemblés ensemble par soudage ou collage.

5. Système de stockage d'énergie de batterie selon la revendication 1, **caractérisé en ce que** : la paroi supérieure du tuyau d'étranglement (3) est pourvue d'un trou ou d'une fente pour monter un outil d'assemblage (3-2).

6. Système de stockage d'énergie de batterie selon la revendication 1, **caractérisé en ce que** : l'entrée d'alimentation (4) et une canalisation du fluide de refroidissement sont fabriquées d'un seul tenant ou séparément ; et le tuyau d'étranglement (3) et l'entrée d'alimentation (4) sont fabriqués d'un seul tenant ou séparément.

7. Système de stockage d'énergie de batterie selon la revendication 1, **caractérisé en ce que** : une paroi extérieure de l'entrée d'alimentation (4) est pourvue d'une fente d'arrêt de retrait (4-1) et d'une bride (4-2), et une paroi intérieure de l'entrée d'alimentation (4) est pourvue d'un mécanisme de limitation, pour limiter et fixer le tuyau d'étranglement (3).

8. Procédé d'égalisation de flux d'un système de stockage d'énergie de batterie, **caractérisé en ce que** : le procédé comprend selon les longueurs, les directions et les différences de hauteur des pipelines entre les modules de batterie et une pompe de fluide de refroidissement (2), le calcul des pertes de pression de fluides de refroidissement au niveau des entrées d'alimentation (4), et la fourniture du dispositif d'égalisation de flux selon l'une quelconque des revendications 1 à 7, pour égaliser les débits au niveau des modules de batterie.

9. Procédé d'égalisation de flux d'un système de stockage d'énergie de batterie selon la revendication 8, **caractérisé en ce que** : les tuyaux d'étranglement (3) sont installés dans les entrées d'alimentation (4) lorsque les modules de batterie sont installés sur un véhicule ; et le procédé est utilisable pour des modules de batterie centralisés ou des modules de batterie distribués.

FIG. 1

FIG. 2

FIG. 3

FIG. 4

FIG. 5

FIG. 6

FIG. 7

FIG. 8

FIG. 9

**EP 3 637 535 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2696433 A1
- DE 102010032901 A1
- DE 102012209302 A1
- US 4578324 A